# EUROPEAN PATENT APPLICATION

(11) **EP 3 886 488 A1**
(43) Date of publication of application: **29.09.2021**
(21) Application number: 19900740.2
(22) Date of filing: 17.12.2019
(51) Int. Cl.: H04W 28/02

(54) **BSR REPORTING METHOD AND DEVICE**

(30) Priority: 17.12.2018 CN 201811543880
(71) Applicant: Huawei Technologies Co., Ltd., Longgang District Shenzhen, Guangdong 518129 (CN)
(72) Inventor: ZHANG, Lili, Shenzhen, Guangdong 518129 (CN); WANG, Junwei, Shenzhen, Guangdong 518129 (CN); ZHANG, Xingwei, Shenzhen, Guangdong 518129 (CN); PENG, Wenjie, Shenzhen, Guangdong 518129 (CN)
(74) Representative: Pfenning, Meinig & Partner mbB
(86) International application number: PCT/CN2019/126113
(87) International publication number: WO 2020/125654

(57) **Abstract**

Embodiments of this application disclose a BSR reporting method and an apparatus, to resolve a problem caused by that a base station allocates an uplink resource to a terminal based on a size, of to-be-transmitted data, indicated by a BSR. The method includes: A first terminal generates a MAC PDU, where the MAC PDU includes a MAC header and a MAC CE, the MAC CE includes a BSR, the BSR is used to indicate a size of to-be-transmitted data, the BSR corresponds to first information, the first information is used to indicate attribute information of the to-be-transmitted data, and the to-be-transmitted data is data to be transmitted by the first terminal to a second terminal through a sidelink; the first terminal sends the MAC PDU to an access network device; and the access network device receives the MAC PDU, and allocates a transmission resource to the first terminal based on the BSR and the attribute information of the to-be-transmitted data.

## Description

This application claims priority to Chinese Patent Application No. 201811543880.1, filed with the China National Intellectual Property Administration on December 17, 2018 and entitled "BSR REPORTING METHOD AND APPARATUS", which is incorporated herein by reference in its entirety.

### TECHNICAL FIELD

Embodiments of this application relate to the field of communications technologies, and in particular, to a buffer status report (buffer status report, BSR) reporting method and an apparatus.

### BACKGROUND

In an existing communications system, if there is data, in a buffer of a terminal, to be transmitted to a peer end, the terminal needs to first report a BSR to a base station, and notify, by using the BSR, the base station of a size of the to-be-transmitted data in the current buffer of the terminal. After receiving the BSR reported by the terminal, the base station determines, based on the BSR, the size of the to-be-transmitted data of the terminal, allocates a corresponding uplink resource (for example, an uplink shared channel (uplink shared channel, UL-SCH) resource) to the terminal based on the size of the to-be-transmitted data of the terminal, and instructs the terminal to transmit data to the peer end on the allocated uplink resource.

However, in a communications system, for example, in a vehicle-to-everything (vehicle to everything, V2X) system, there are a plurality of types of data with different transmission requirements, for example, vehicle-to-vehicle (vehicle to vehicle, V2V) data, vehicle-to-person (vehicle to person, V2P) data, vehicle-to-network (vehicle to network, V2N) data, and vehicle-to-infrastructure (vehicle to infrastructure, V2I) data. Service types, quality of service (quality of service, QoS) requirements, transmission links, and the like of the data may be different. The V2V data and the V2N data are used as examples. The V2V data needs to be transmitted to the peer end through a sidelink (sidelink), and the V2N data needs to be transmitted to the peer end through a Uu link. In this case, if the base station allocates the uplink resource to the terminal based on only the size, of the to-be-transmitted data, indicated by the BSR, the following problem occurs: The base station allocates a same uplink resource to terminals having different transmission requirements, and consequently, the uplink resource is not preferably allocated to a terminal having a high transmission requirement; or when the terminal transmits data on the uplink resource allocated by the base station, a QoS requirement of the data cannot be ensured; or the uplink resource allocated by the base station to the terminal does not match a resource pool that can be used by the terminal, and the terminal cannot transmit data on the uplink resource allocated by the base station.

### SUMMARY

Embodiments of this application provide a BSR reporting method and an apparatus, to resolve a problem caused by that a base station allocates an uplink resource to a terminal based on a size, of to-be-transmitted data, indicated by a BSR.

To achieve the foregoing objective, the following technical solutions are used in the embodiments of this application. According to a first aspect, a BSR reporting method is provided. The method includes: A first terminal generates a MAC PDU including a MAC header and a MAC CE, and sends the MAC PDU to an access network device. The MAC CE includes a BSR, the BSR is used to indicate a size of to-be-transmitted data, the BSR corresponds to first information, the first information is used to indicate attribute information of the to-be-transmitted data, and the to-be-transmitted data is data to be transmitted by the first terminal to a second terminal through a sidelink.

Based on the method provided in the first aspect, before the first terminal transmits the data to the second terminal through the sidelink, the size of the to-be-transmitted data and the attribute information of the to-be-transmitted data may be indicated to the access network device. Therefore, the access network device allocates a transmission resource to the first terminal based on the size, of the to-be-transmitted data, indicated by the BSR and the attribute information of the to-be-transmitted data. Compared with the conventional technology, related information of to-be-transmitted data reported by the terminal to the access network device is diversified, and provides abundant reference basis for the access network device to allocate the transmission resource, so that the transmission resource allocated by the access network device to the terminal better satisfies a data transmission requirement. This avoids a problem caused by that an existing access network device allocates a transmission resource to a terminal only based on a size, of to-be-transmitted data, indicated by a BSR.

In a possible design, with reference to the first aspect, the first information is included in the MAC CE; and the first information is an indicator; or the first information is an identifier of a first logical channel or an identifier of a first logical channel group, and there is a correspondence between the identifier of the first logical channel or the identifier of the first logical channel group and the attribute information of the to-be-transmitted data.

Based on the possible design, the attribute information of the to-be-transmitted data may be explicitly indicated by using an indicator included in the MAC CE, or the attribute information of the to-be-transmitted data may be indicated by using an identifier, of a logical channel group, included in the MAC CE or an identifier, of a logical channel, included in the MAC CE. An indication manner is flexible.

In a possible design, with reference to the first aspect, the BSR includes an identifier of a second logical channel group, the first information is the identifier of the second logical channel group, and there is a correspondence between the identifier of the second logical channel group and the attribute information of the to-be-transmitted data; or the BSR is located in a first bit field in the MAC CE, the first information is the first bit field, and there is a correspondence between the first bit field and the attribute information of the to-be-transmitted data.

Based on the possible design, the attribute information of the to-be-transmitted data may be indicated by using an identifier of a logical channel group bound to the BSR, or the attribute information of the to-be-transmitted data may be implicitly indicated by using a bit field in which the BSR is located. An indication manner is flexible.

In a possible design, with reference to the first aspect, the first information is included in the MAC header, and the first information is an indicator; or the first information is a format of the MAC CE, and there is a correspondence between the format of the MAC CE and the attribute information of the to-be-transmitted data.

Based on the possible design, the attribute information of the to-be-transmitted data may be explicitly indicated by using an indicator included in the MAC header, or a format of the to-be-transmitted data may be implicitly indicated by using the format of the MAC CE. An indication manner is flexible.

In a possible design, with reference to any one of the first aspect or the possible designs of the first aspect, the attribute information of the to-be-transmitted data includes one or a combination of a service type of the to-be-transmitted data, a transmission link corresponding to the to-be-transmitted data, a QoS requirement of the to-be-transmitted data, and a unicast pair corresponding to the to-be-transmitted data; and the unicast pair includes the first terminal and the second terminal.

Based on the possible design, a plurality of types of information such as the service type, the transmission link, and the QoS requirement of the to-be-transmitted data, and the unicast pair corresponding to the to-be-transmitted data may be reported to the access network device.

In a possible design, with reference to any one of the first aspect or the possible designs of the first aspect, the service type includes any one or more of a broadcast service, a unicast service, a groupcast service, an aperiodic service, and a periodic service.

In a possible design, with reference to any one of the first aspect or the possible designs of the first aspect, the transmission link includes any one or more of an LTE sidelink, an NR sidelink, and an NR Uu link.

In a possible design, with reference to any one of the first aspect or the possible designs of the first aspect, the method includes: The first terminal receives first indication information sent by the access network device, where the first indication information is used to indicate the first terminal to indicate the attribute information of the to-be-transmitted data by using the first information; and that a first terminal generates a MAC PDU includes: The first terminal generates the MAC PDU based on the first indication information.

Based on the possible design, the first terminal may indicate the attribute information of the to-be-transmitted data by using the first information under an instruction of the access network device.

In a possible design, with reference to any one of the first aspect or the possible designs of the first aspect, the MAC PDU includes second indication information, where the second indication information is used to indicate, to the access network device, that the first terminal indicates the attribute information of the to-be-transmitted data by using the first information.

Based on the possible design, the first terminal may indicate, to the access network device, a manner of indicating the attribute information of the to-be-transmitted data, so that the access network device parses the received MAC PDU according to an indication of the first terminal, to obtain the first information, and determines the attribute information of the to-be-transmitted data based on the first information.

According to a second aspect, a communications apparatus is provided. The communications apparatus may be a first terminal, or a chip or a system on chip in a first terminal, or the communications apparatus may be a component or an apparatus that is in a first terminal and that is responsible for implementing a related function or operation in the embodiments of this application. The communications apparatus may implement functions performed by the first terminal in the first aspect or the possible designs of the first aspect, and the functions may be implemented by hardware, or by hardware by executing corresponding software. The hardware or the software includes one or more modules corresponding to the foregoing functions. For example, the communications apparatus may include a generation unit and a sending unit.

The generation unit is configured to generate a MAC PDU, where the MAC PDU includes a MAC header and a MAC CE, and the MAC CE includes a BSR; and the BSR is used to indicate a size of to-be-transmitted data, the BSR corresponds to first information, the first information is used to indicate attribute information of the to-be-transmitted data, and the to-be-transmitted data is data to be transmitted by the communications apparatus to a second terminal through a sidelink.

The sending unit is configured to send the MAC PDU to an access network device.

For a specific implementation of the communications apparatus, refer to behavior functions of the first terminal in the BSR reporting method provided in any one of the first aspect or the possible designs of the first aspect. Details are not described herein again. Therefore, the provided communications apparatus can achieve same beneficial effects as any one of the first aspect or the possible designs of the first aspect.

According to a third aspect, a communications apparatus is provided, and includes a processor and a memory. The memory is configured to store computer-executable instructions. When the communications apparatus is run, the processor executes the computer-executable instructions stored in the memory, so that the communications apparatus performs the BSR reporting method according to any one of the first aspect or the possible designs of the first aspect. For example, the communications apparatus may be the foregoing first terminal, or a chip or a system on chip in the first terminal, or the communications apparatus may be a component or an apparatus that is in the first terminal and that is responsible for implementing a related function or operation in the embodiments of this application. According to a fourth aspect, a computer-readable storage medium is provided. The computer-readable storage medium stores instructions. When the instructions are run on a computer, the computer is enabled to be capable of performing the BSR reporting method according to any one of the first aspect or the possible designs of the foregoing aspects.

According to a fifth aspect, a computer program product including instructions is provided. When the computer program product runs on a computer, the computer is enabled to be capable of performing the BSR reporting method according to any one of the first aspect or the possible designs of the foregoing aspects.

According to a sixth aspect, a chip system is provided. The chip system includes a processor and a communications interface, and is configured to support a communications apparatus in implementing functions in the foregoing aspects. For example, the processor generates a MAC PDU, and sends the MAC PDU to an access network device through the communications interface, where the MAC PDU includes a MAC header and a MAC CE, and the MAC CE includes a BSR; and the BSR is used to indicate a size of to-be-transmitted data, the BSR corresponds to first information, the first information is used to indicate attribute information of the to-be-transmitted data, and the to-be-transmitted data is data to be transmitted by the communications apparatus to a second terminal through a sidelink. In a possible design, the chip system further includes a memory, and the memory is configured to store a program instruction and data that are necessary for the communications apparatus. The chip system may include a chip, or may include a chip and another discrete component.

For technical effects achieved by any one of the design manners of the third aspect to the sixth aspect, refer to technical effects achieved by any one of the first aspect or the possible designs of the first aspect. Details are not described again.

According to a seventh aspect, a BSR reporting method is provided. The method includes: An access network device receives a MAC PDU sent by a first terminal, where the MAC PDU includes a MAC header and a MAC CE, and the MAC CE includes a BSR; the BSR is used to indicate a size of to-be-transmitted data, the BSR corresponds to first information, the first information is used to indicate attribute information of the to-be-transmitted data, and the to-be-transmitted data is data to be transmitted by the first terminal to a second terminal through a sidelink; and the access network device allocates a transmission resource to the first terminal based on the BSR and the attribute information of the to-be-transmitted data.

Based on the method provided in the seventh aspect, before the first terminal transmits the data to the second terminal through the sidelink, the access network device may obtain the size and the attribute information that are of the to-be-transmitted data and that are reported by the first terminal, and allocate the transmission resource to the first terminal based on the size, of the to-be-transmitted data, indicated by the BSR and the attribute information of the to-be-transmitted data. Compared with the conventional technology, related information of to-be-transmitted data reported by the terminal to the access network device is diversified, and provides abundant reference basis for the access network device to allocate the transmission resource, so that the transmission resource allocated by the access network device to the terminal better satisfies a data transmission requirement. This avoids a problem caused by that an existing access network device allocates a transmission resource to a terminal only based on a size, of to-be-transmitted data, indicated by a BSR.

In a possible design, with reference to the seventh aspect, the first information is included in the MAC CE; and the first information is an indicator; or the first information is an identifier of a first logical channel or an identifier of a first logical channel group, and there is a correspondence between the identifier of the first logical channel or the identifier of the first logical channel group and the attribute information of the to-be-transmitted data.

Based on the possible design, the attribute information of the to-be-transmitted data may be explicitly indicated by using an indicator included in the MAC CE, or the attribute information of the to-be-transmitted data may be indicated by using an identifier, of a logical channel group, included in the MAC CE or an identifier, of a logical channel, included in the MAC CE. An indication manner is flexible.

In a possible design, with reference to the seventh aspect, the BSR includes an identifier of a second logical channel group, the first information is the identifier of the second logical channel group, and there is a correspondence between the identifier of the second logical channel group and the attribute information of the to-be-transmitted data; or the BSR is located in a first bit field in the MAC CE, the first information is the first bit field, and there is a correspondence between the first bit field and the attribute information of the to-be-transmitted data.

Based on the possible design, the attribute information of the to-be-transmitted data may be indicated by using an identifier of a logical channel group bound to the BSR, or the attribute information of the to-be-transmitted data may be implicitly indicated by using a bit field in which the BSR is located. An indication manner is flexible.

In a possible design, with reference to the seventh aspect, the first information is included in the MAC header, and the first information is an indicator; or the first information is a format of the MAC CE, and there is a correspondence between the format of the MAC CE and the attribute information of the to-be-transmitted data.

Based on the possible design, the attribute information of the to-be-transmitted data may be explicitly indicated by using an indicator included in the MAC header, or a format of the to-be-transmitted data may be implicitly indicated by using the format of the MAC CE. An indication manner is flexible.

In a possible design, with reference to any one of the seventh aspect or the possible designs of the seventh aspect, the attribute information of the to-be-transmitted data includes one or a combination of a service type of the to-be-transmitted data, a transmission link corresponding to the to-be-transmitted data, a QoS requirement of the to-be-transmitted data, and a unicast pair corresponding to the to-be-transmitted data; and the unicast pair includes the first terminal and the second terminal.

Based on the possible design, a plurality of types of information such as the service type, the transmission link, and the QoS requirement of the to-be-transmitted data, and the unicast pair corresponding to the to-be-transmitted data may be reported to the access network device.

In a possible design, with reference to any one of the seventh aspect or the possible designs of the seventh aspect, the service type includes any one or more of a broadcast service, a unicast service, a groupcast service, an aperiodic service, and a periodic service.

In a possible design, with reference to any one of the seventh aspect or the possible designs of the seventh aspect, the transmission link includes any one or more of an LTE sidelink, an NR sidelink, and an NR Uu link.

In a possible design, with reference to any one of the seventh aspect or the possible designs of the seventh aspect, the method includes: The access network device sends first indication information to the first terminal, where the first indication information is used to indicate the first terminal to indicate the attribute information of the to-be-transmitted data by using the first information.

Based on the possible design, the access network device may indicate the first terminal to indicate the attribute information of the to-be-transmitted data by using the first information, so that the first terminal generates the MAC PDU based on an indication of the access network device, and the BSR included in the MAC CE in the MAC PDU corresponds to the first information.

In a possible design, with reference to any one of the seventh aspect or the possible designs of the seventh aspect, the MAC PDU includes second indication information, where the second indication information is used to indicate, to the access network device, that the first terminal indicates the attribute information of the to-be-transmitted data by using the first information.

Based on the possible design, the first terminal may indicate, to the access network device, a manner of indicating the attribute information of the to-be-transmitted data, so that the access network device may parse the received MAC PDU according to an indication of the first terminal, to obtain the first information, and determines the attribute information of the to-be-transmitted data based on the first information.

According to an eighth aspect, this application provides a communications apparatus. The communications apparatus may be an access network device, or a chip or a system on chip in an access network device, or may be a component or an apparatus that is in an access network device and that is responsible for implementing a related function or operation in the embodiments of this application. The communications apparatus may implement functions performed by the access network device in the foregoing aspects or the possible designs, and the functions may be implemented by hardware, or by hardware by executing corresponding software. The hardware or the software includes one or more modules corresponding to the foregoing functions. For example, the communications apparatus may include a receiving unit and an allocation unit.

The receiving unit is configured to receive a MAC PDU sent by a first terminal, where the MAC PDU includes a MAC header and a MAC CE, and the MAC CE includes a BSR; and the BSR is used to indicate a size of to-be-transmitted data, the BSR corresponds to first information, the first information is used to indicate attribute information of the to-be-transmitted data, and the to-be-transmitted data is data to be transmitted by the first terminal to a second terminal through a sidelink.

The allocation unit is configured to allocate a transmission resource to the first terminal based on the BSR and the attribute information of the to-be-transmitted data.

For a specific implementation of the communications apparatus, refer to behavior functions of the access network device in the BSR reporting method provided in any one of the seventh aspect or the possible designs of the seventh aspect. Details are not described herein again. Therefore, the provided communications apparatus can achieve same beneficial effects as any one of the seventh aspect or the possible designs of the seventh aspect.

According to a ninth aspect, a communications apparatus is provided, and includes a processor and a memory. The memory is configured to store computer-executable instructions. When the communications apparatus is run, the processor executes the computer-executable instructions stored in the memory, so that the communications apparatus performs the BSR reporting method according to any one of the seventh aspect or the possible designs of the seventh aspect. For example, the communications apparatus may be an access network device, or a chip or a system on chip in an access network device, or the communications apparatus may be a component or an apparatus that is in an access network device and that is responsible for implementing a related function or operation in the embodiments of this application.

According to a tenth aspect, a computer-readable storage medium is provided. The computer-readable storage medium stores instructions. When the instructions are run on a computer, the computer is enabled to be capable of performing the BSR reporting method according to any one of the seventh aspect or the possible designs of the foregoing aspects. According to an eleventh aspect, a computer program product including instructions is provided. When the computer program product runs on a computer, the computer is enabled to be capable of performing the BSR reporting method according to any one of the seventh aspect or the possible designs of the foregoing aspects.

According to a twelfth aspect, a chip system is provided. The chip system includes a processor and a communications interface, and is configured to support a communications apparatus in implementing functions in the foregoing aspects. For example, the processor receives, through the communications interface, a MAC PDU sent by a first terminal, where the MAC PDU includes a MAC header and a MAC CE, and the MAC CE includes a BSR; the BSR is used to indicate a size of to-be-transmitted data, the BSR corresponds to first information, the first information is used to indicate attribute information of the to-be-transmitted data, and the to-be-transmitted data is data to be transmitted by the first terminal to a second terminal through a sidelink; and the processor allocates a transmission resource to the first terminal based on the BSR and the attribute information of the to-be-transmitted data. In a possible design, the chip system further includes a memory, and the memory is configured to store a program instruction and data that are necessary for the communications apparatus. The chip system may include a chip, or may include a chip and another discrete component.

For technical effects achieved by any one of the design manners of the ninth aspect to the twelfth aspect, refer to technical effects achieved by any one of the seventh aspect or the possible designs of the seventh aspect. Details are not described again.

According to a thirteenth aspect, a BSR reporting system is provided, and includes the communications apparatus according to any one of the second aspect to the sixth aspect and the communications apparatus according to any one of the eighth aspect to the twelfth aspect.

### BRIEF DESCRIPTION OF DRAWINGS

FIG. 1 is an architectural diagram of a communications system according to an embodiment of this application;
FIG. 2 is a schematic composition diagram of a communications apparatus 200 according to an embodiment of this application;
FIG. 3 is a flowchart of a BSR reporting method according to an embodiment of this application;
FIG. 4a is a schematic diagram of a MAC CE according to an embodiment of this application;
FIG. 4b is a schematic diagram of another MAC CE according to an embodiment of this application;
FIG. 4c is a schematic diagram of still another MAC CE according to an embodiment of this application;
FIG. 4d is a schematic diagram of still another MAC CE according to an embodiment of this application;
FIG. 5 is a schematic diagram of a MAC CE according to an embodiment of this application;
FIG. 6 is a schematic diagram of a MAC PDU according to an embodiment of this application;
FIG. 7 is a schematic composition diagram of a communications apparatus 70 according to an embodiment of this application; and
FIG. 8 is a schematic composition diagram of a communications apparatus 80 according to an embodiment of this application.

### DESCRIPTION OF EMBODIMENTS

The following describes the implementations of the embodiments of this application in detail with reference to the accompanying drawings.

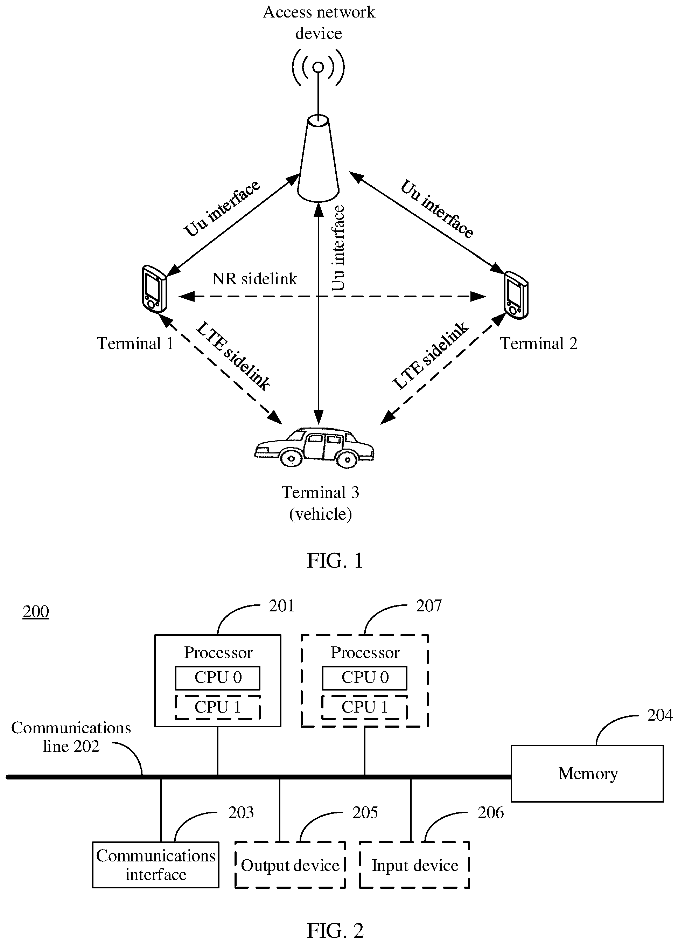

The method provided in the embodiments of this application may be used in any communications system that supports a terminal in reporting a BSR to an access network device (for example, a base station). The communications system may be a 3rd generation partnership project (3rd generation partnership project, 3GPP) communications system, for example, may be a long term evolution (long term evolution, LTE) system, or may be a 5th generation (5th generation, 5G) mobile communications system or a new radio (new radio, NR) system, or may be a V2X system. This is not limited. The following uses the communications system shown in FIG. 1 as an example to describe the method provided in this embodiment of this application.

As shown in FIG. 1, the communications system may include an access network device and a plurality of terminals (a terminal 1, a terminal 2, and a terminal 3 shown in FIG. 1). The access network device may communicate with the terminals through a Uu link, and the terminals may communicate with each other through a sidelink. The Uu link is a communications link between the terminal and a network side device, and the Uu link may include an NR Uu link. The sidelink is a direct link between the terminals, and the sidelink may also be named as a PC5 link. The sidelink may work in different radio access technologies (radio access technology, RAT). In this embodiment of this application, the sidelink may be classified into an LTE sidelink and an NR sidelink based on different RATs in which the sidelink works. The NR sidelink may also be referred to as a new system sidelink, a 5G sidelink, or the like. For example, as shown in FIG. 1, the terminal 1 may communicate with the terminal 2 through the NR sidelink, the terminal 1 may communicate with the terminal 3 through the LTE sidelink, and the terminal 2 may communicate with the terminal 3 through the LTE sidelink.

For example, the terminal in FIG. 1 may be named as a terminal (terminal), user equipment (user equipment, UE), a mobile station (mobile station, MS), a mobile terminal (mobile terminal, MT), or the like. The terminal may support V2X communication, for example, may transmit V2V data, V2P data, V2N data, V2I information, anti-collision data between vehicles, entertainment application data, navigation data exchanged between vehicles, and the like to a peer end. The terminal may include but is not limited to a vehicle-mounted terminal, a mobile phone (mobile phone), a tablet computer or a computer with a wireless transceiver function, a smart gas station, a smart signal light, a virtual reality (virtual reality, VR) terminal, an augmented reality (augmented reality, AR) terminal, a wireless terminal in industrial control, a wireless terminal in unmanned driving, a wireless terminal in telemedicine, a wireless terminal in a smart grid, and the like. In the embodiments of this application, an apparatus for implementing a function of a terminal may be a terminal, or may be an apparatus that can support a terminal in implementing the function, for example, a chip system. The following describes the method provided in the embodiments of this application by using an example in which an apparatus for implementing a function of a terminal is a terminal.

The access network device in FIG. 1 is mainly configured to implement functions such as a radio physical control function, resource scheduling and radio resource management, radio access control, and mobility management. For example, the access network device may be an access network (access network, AN)/radio access network (radio access network, RAN) device, or may be a device including a plurality of 5G-AN/5G-RAN nodes, or may be a NodeB (nodeB, NB), an evolved NodeB (evolution nodeB, eNB), a next generation NodeB (generation nodeB, gNB), a transmission reception point (transmission reception point, TRP), a transmission point (transmission point, TP), or any node of some other access nodes. In the embodiments of this application, an apparatus for implementing a function of an access network device may be an access network device, or may be an apparatus that can support an access network device in implementing the function, for example, a chip system. The following describes the method provided in the embodiments of this application by using an example in which an apparatus for implementing a function of an access network device is an access network device.

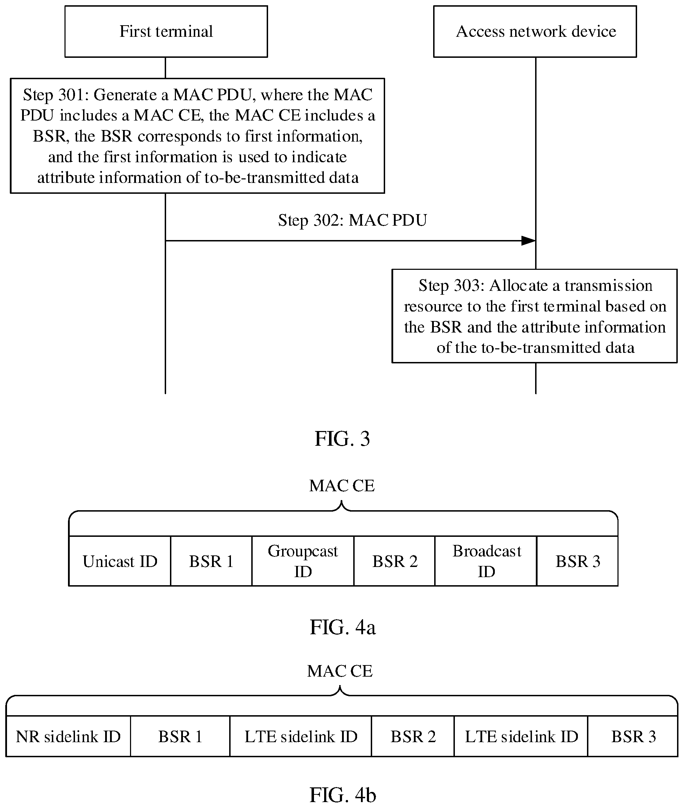

In the communications system shown in FIG. 1, when there is to-be-transmitted data in a buffer (buffer) of the terminal, the terminal may report a BSR and attribute information that is of the to-be-transmitted data (for example, a service type of the to-be-transmitted data, a QoS requirement of the to-be-transmitted data, a transmission link of the to-be-transmitted data, and a unicast pair corresponding to the to-be-transmitted data) to the access network device. Therefore, the access network device allocates an appropriate resource to the terminal based on a size, of the to-be-transmitted data, indicated by the BSR and the attribute information of the to-be-transmitted data, so that the terminal transmits data on the resource allocated by the access network device. For example, the service type may also be referred to as a communications type. The to-be-transmitted data may be data to be transmitted through a sidelink. For a process in which the terminal reports the BSR and the attribute information of the to-be-transmitted data to the access network device, refer to the method shown in FIG. 3.

Optionally, the network architecture shown in FIG. 1 is merely an example architecture, and a quantity of devices included in the communications system shown in FIG. 1 is not limited in the embodiments of this application. Although not shown, in addition to the devices shown in FIG. 1, the network shown in FIG. 1 may further include another functional entity, for example, may include a core network, a data network (data network, DN), and the like. In addition, in the communications system in FIG. 1, names of the devices and the communications links between the devices are merely an example. In specific implementation, the devices and the communications links between the devices may alternatively have other names. This is not specifically limited in this embodiment of this application. For example, the terminal and the access network device that execute this embodiment of this application may be implemented by hardware shown in FIG. 2 or a combination of hardware and computer software. FIG. 2 is a schematic composition diagram of a communications apparatus 200 according to an embodiment of this application. As shown in FIG. 2, the communications apparatus 200 may include at least one processor 201, a communications line 202, and at least one communications interface 203. Further, the apparatus may include a memory 204. The processor 201, the memory 204, and the communications interface 203 may be connected to each other by using the communications line 202. In this embodiment of this application, the "at least one" may be one, two, three, or more, and this is not limited.

The processor 201 may be a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor may alternatively be any other apparatus having a processing function, for example, a circuit, a component, or a software module.

The communications line 202 may include a path, configured to transmit information between the components included in the communications apparatus.

The communications interface 203 may be configured to communicate with another device or a communications network (for example, the Ethernet, a radio access network (radio access network, RAN), or a wireless local area network (wireless local area networks, WLAN)). The communications interface 203 may be a module, a circuit, a transceiver, or any apparatus that can implement communication.

The memory 204 may include a database shown in FIG. 2, and may be a read-only memory (read-only memory, ROM) or another type of static storage device that can store static information and/or an instruction, or may be a random access memory (random access memory, RAM) or another type of dynamic storage device that can store information and/or an instruction, or may be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that is accessible by a computer. This is not limited thereto. In a possible design, the memory 204 may be independent of the processor 201. To be specific, the memory 204 may be a memory outside the processor 201. In this case, the memory 204 may be connected to the processor 201 by using the communications line 202, and is configured to store an instruction or program code. When invoking and executing the instruction or the program code stored in the memory 204, the processor 201 can implement a communication method provided in the following embodiment of this application. In another possible design, the memory 204 may alternatively be integrated with the processor 201. To be specific, the memory 204 may be a memory inside the processor 201. For example, the memory 204 is a cache, and may be configured to temporarily store some data, instruction information, and/or the like.

In an example, the processor 201 may include one or more CPUs, such as a CPU 0 and a CPU 1 in FIG. 2. In another possible implementation, the communications apparatus 200 may include a plurality of processors, for example, the processor 201 and a processor 207 in FIG. 2. In still another possible implementation, the communications apparatus 200 may further include an output device 205 and an input device 206. For example, the input device 206 may be a device such as a keyboard, a mouse, a microphone, or a joystick, and the output device 205 may be a device such as a display screen or a speaker (speaker).

It should be noted that the communications apparatus 200 may be a general-purpose device or a dedicated device. For example, the communications apparatus 200 may be a desktop computer, a portable computer, a network server, a mobile phone, a vehicle having a corresponding communication function, a vehicle-mounted communications apparatus, a vehicle-mounted communications chip, a tablet computer, a wireless terminal, an embedded device, a chip system, or a device having a structure similar to that in FIG. 2. A type of the communications apparatus 200 is not limited in this embodiment of this application. In this embodiment of this application, the chip system may include a chip, or may include a chip and another discrete component. In addition, a structure of the device shown in FIG. 2 does not constitute a limitation on the communications apparatus. In addition to the components shown in FIG. 2, the communications apparatus may include more or fewer components than those shown in the figure, or combine some components, or have different component arrangements.

With reference to the communications system shown in FIG. 1, the following describes the BSR reporting method provided in this embodiment of this application. The terminal and the access network device that are mentioned in the following method embodiments may use or include the component hardware shown in FIG. 2, and details are not described again. It should be noted that in the following embodiments of this application, names of messages between devices, names of parameters in messages, or the like are merely an example, and may be other names during specific implementation. This is not specifically limited in the embodiments of this application.

FIG. 3 shows a BSR reporting method according to an embodiment of this application. The method is performed by a first terminal and an access network device through interaction, so that the access network device allocates a transmission resource to the first terminal based on a size of to-be-transmitted data and attribute information of the to-be-transmitted data of the first terminal. Before performing the method shown in FIG. 3, the first terminal determines that there is data to be transmitted to a second terminal in a buffer of the first terminal, and the first terminal is triggered to perform the process shown in FIG. 3. For example, the to-be-transmitted data may be data to be transmitted by the first terminal to the second terminal through a sidelink (an LTE sidelink or an NR sidelink), such as V2V data, V2I data, V2P data, or anti-collision data between vehicles, or may be data to be transmitted by the first terminal to a network side device through an NR Uu link. In this embodiment of this application, for a manner of determining, by the first terminal, that there is to-be-transmitted data in the buffer of the first terminal, refer to an existing manner. The first terminal and the second terminal may be any two terminals that communicate with each other through the sidelink in FIG. 1, and the access network device may be the access network device in FIG. 1.

As shown in FIG. 3, the method may include step 301 to step 303.

Step 301: The first terminal generates a media access control (media access control, MAC) protocol data unit (protocol data unit, PDU).

For example, the MAC PDU generated by the first terminal may include a MAC header and a MAC control element (control element, CE). The MAC header may include a protocol version number, other information, and the like. The MAC CE may include a BSR, and the BSR may be used to indicate the size of the to-be-transmitted data. The BSR may correspond to first information, and the first information may be used to indicate the attribute information of the to-be-transmitted data. The first information may be included in the MAC header, or may be included in the MAC CE. Optionally, for a manner in which the first information indicates the attribute information of the to-be-transmitted data, refer to descriptions in the following manner (1) to manner (6).

In this embodiment of this application, the MAC CE may include one BSR, or may include two or more BSRs. One or more BSRs may be in a one-to-one correspondence with one or more pieces of first information, and each piece of first information is only used to indicate attribute information, of to-be-transmitted data, indicated by a BSR corresponding to the first information. Alternatively, one or more BSRs may correspond to one piece of first information, and the first information indicates attribute information, of to-be-transmitted data, indicated by the one or more BSRs. This is not limited.

In the embodiments of this application, the attribute information of the to-be-transmitted data may include but is not limited to one or a combination of a service type of the to-be-transmitted data, a transmission link corresponding to the to-be-transmitted data, a quality of service (quality of service, QoS) requirement of the to-be-transmitted data, a unicast pair corresponding to the to-be-transmitted data.

For example, the service type may include but is not limited to any one or more of a broadcast (broadcast) service, a unicast (unicast) service, a groupcast (groupcast) service, an aperiodic (aperiodical) service, or a periodic (periodical) service, or may include another service type. This is not limited. The broadcast (broadcast) service and the groupcast (groupcast) service may be of a same service type. The periodic service may be further classified into a periodic unicast service, a periodic groupcast service, and the like, and the aperiodic service may be further classified into an aperiodic unicast service, an aperiodic groupcast service, and the like.

The transmission link may include but is not limited to any one or more of an LTE sidelink, an NR sidelink, and an NR Uu link, and may further include another link. This is not limited.

The QoS requirement may include requirements such as a delay and a transmission rate. The QoS requirement uniquely corresponds to a QoS identifier. The QoS identifier may be used to identify the QoS requirement. The QoS requirement of the to-be-transmitted data may also be described as a QoS identifier corresponding to the QoS requirement of the to-be-transmitted data. For example, the QoS identifier may be a prose per-packet priority (prose per-packet priority, PPPP), a 5th generation quality of service identifier (5th generation QoS identifier, 5QI), a quality of service flow identifier (QoS flow identifier, QFI), or the like. This is not limited.

The unicast pair (unicast pair) may include the first terminal and another terminal that communicates with the first terminal in a one-to-one manner. For example, the unicast pair corresponding to the to-be-transmitted data may include the first terminal and the second terminal, or may include the first terminal and another terminal. This is not limited. For related descriptions of the BSR, refer to existing descriptions. For example, the BSR may be used to indicate the size of the to-be-transmitted data, or the size of the to-be-transmitted data may be described as a buffer size. The BSR may include an index (index) value, and the index value corresponds to the buffer size. For example, the index value is any value in 0 to 63, and the index value index=0 indicates that the size of the to-be-transmitted data is 0, that is, there is no to-be-transmitted data. The BSR is bound to a logical channel or a logical channel group, and is used to indicate a size of to-be-transmitted data on the logical channel or the logical channel group. The logical channel group may include one or more logical channels. The BSR may be classified into three types: a long (long) BSR, a short (short) BSR, and a truncated (truncated) BSR. When the BSR is the short BSR or the truncated BSR, in addition to an index, the BSR may further include an identifier of the logical channel bound to the BSR or an identifier of the logical channel group bound to the BSR. However, the long BSR does not include the identifier of the logical channel bound to the BSR or the identifier of the logical channel group bound to the BSR. By default, the BSR is bound to a logical channel or a logical channel group on a terminal.

Step 302: The first terminal sends the MAC PDU to an access network device.

For example, the first terminal may send the MAC PDU to the access network device through a Uu link.

Step 303: The access network device receives the MAC PDU sent by the first terminal, and allocates a transmission resource to the first terminal based on the BSR and the attribute information of the to-be-transmitted data.

For example, the transmission resource may be used for sidelink transmission. The transmission resource may include but is not limited to a time domain resource, a frequency domain resource, a downlink control information (downlink control information, DCI) format, a radio network temporary identifier (radio network temporary identifier, RNTI) used when DCI is scrambled, and the like.

After receiving the MAC PDU, the access network device may first determine the attribute information of the to-be-transmitted data based on the first information included in the MAC CE or the MAC header, and then allocate the transmission resource to the first terminal based on the BSR and the attribute information of the to-be-transmitted data. For example, for a manner in which the access network device determines the attribute information of the to-be-transmitted data based on the first information, refer to any one or more of the following manners (1) to (6).

For example, that the access network device allocates a transmission resource to the first terminal based on the BSR and the attribute information of the to-be-transmitted data may include: The access network device allocates, based on the BSR, the transmission resource to the first terminal from a resource pool corresponding to the attribute information of the to-be-transmitted data.

For example, if first information corresponding to a BSR 1 in the MAC CE indicates the unicast service, and first information corresponding to a BSR 2 indicates the groupcast service, the access network device may allocate, based on the BSR 1 and the BSR 2, the transmission resource to the terminal from resource pools corresponding to the unicast service and the groupcast service. For example, if the unicast service corresponds to a resource pool pool 1, and the groupcast service corresponds to a resource pool pool 2, the access network device allocates, based on the BSR 1, the transmission resource to the unicast service of the terminal from the resource pool pool 1, and the access network device allocates, based on the BSR 2, the transmission resource to the groupcast service of the terminal from the resource pool pool 2.

For another example, when the access network device determines, based on the first information included in the MAC header, that to-be-transmitted data indicated by all BSRs included in the MAC CE corresponds to the unicast service, and a BSR included in the MAC CE is a BSR 1, the access network device may allocate the transmission resource to the terminal based on a resource pool corresponding to the unicast service. For example, if the unicast service corresponds to a resource pool pool 1, the access network device may allocate, based on the BSR 1, the transmission resource to the unicast service of the terminal from the resource pool pool 1.

When the access network device determines, based on the first information included in the MAC header, that to-be-transmitted data indicated by all BSRs included in the MAC CE corresponds to the groupcast service, and a BSR included in the MAC CE is a BSR 1, the access network device may allocate the transmission resource to the terminal based on a resource pool corresponding to the groupcast service. For example, if the groupcast service corresponds to a resource pool pool 2, the access network device may allocate, based on the BSR 1, the transmission resource to the unicast service of the terminal from the resource pool pool 2.

Optionally, in this embodiment of this application, to improve reusability of the first information, first information indicating different types of attribute information may be the same. For example, an indicator 0001 may be used to indicate that the service type of the to-be-transmitted data is the unicast service, the indicator 0001 may further be used to indicate that the transmission link of the to-be-transmitted data is the NR sidelink, and the indicator 0001 may be used to indicate that the QoS requirement of the to-be-transmitted data is a PPPP 1. This is not limited.

In this scenario, the MAC header of the MAC PDU may further include second information, and the second information is used to indicate a type of attribute information (the service type, the QoS requirement, the transmission link, or the corresponding unicast pair) that is of the to-be-transmitted data and that is specifically indicated by the first information. After receiving the MAC PDU, the access network device may first identify, based on the second information, a type of attribute information indicated by the first information, then determine the attribute information of the to-be-transmitted data based on a correspondence between the first information and the type of attribute information, and then allocate the transmission resource to the first terminal based on the BSR and the attribute information of the to-be-transmitted data.

For example, when the second information included in the MAC header indicates that the first information specifically indicates the service type of the to-be-transmitted data, the access network device may determine, based on a correspondence between the first information and the service type, a service type to which the to-be-transmitted data belongs. For example, if first information corresponding to a BSR 1 in the MAC CE indicates the unicast service, and first information corresponding to a BSR 2 indicates the groupcast service, the access network device may allocate, based on the BSR 1 and the BSR 2, the transmission resource to the terminal from resource pools corresponding to the unicast service and the groupcast service. For example, if the unicast service corresponds to a resource pool pool 1, and the groupcast service corresponds to a resource pool pool 2, the access network device allocates, based on the BSR 1, the transmission resource to the unicast service of the terminal from the resource pool pool 1, and the access network device allocates, based on the BSR 2, the transmission resource to the groupcast service of the terminal from the resource pool pool 2.

For another example, when the second information included in the MAC header indicates that the first information specifically indicates the service type of the to-be-transmitted data, the access network device may determine, based on a correspondence between the first information and the service type, a service type to which the to-be-transmitted data belongs. For example, if first information corresponding to a BSR 1 in the MAC CE indicates the unicast service, first information corresponding to a BSR 2 indicates the groupcast service, and first information corresponding to a BSR 3 indicates the broadcast service, the access network device may allocate, based on the BSR 1, the BSR 2, and the BSR 3, the transmission resource to the terminal from resource pools corresponding to the unicast service, the groupcast service, and the broadcast service. For example, if the unicast service corresponds to a resource pool pool 1, the groupcast service corresponds to a resource pool pool 2, and the broadcast service corresponds to a resource pool pool 3, the access network device allocates, based on the BSR 1, the transmission resource to the unicast service of the terminal from the resource pool pool 1; allocates, based on the BSR 2, the transmission resource to the groupcast service of the terminal from the resource pool pool 2; and allocates, based on the BSR 3, the transmission resource to the broadcast service of the terminal from the resource pool pool 3.

For another example, when the second information included in the MAC header indicates that the first information specifically indicates that the to-be-transmitted data is the aperiodic service or the periodic service, the access network device may determine, based on a correspondence between the first information and the aperiodic service or the periodic service, that the to-be-transmitted data belongs to the aperiodic service or the periodic service. For example, if first information corresponding to a BSR 1 in the MAC CE indicates the periodic service, and first information corresponding to a BSR 2 indicates the aperiodic service, the access network device may allocate, based on the BSR 1 and the BSR 2, the transmission resource to the terminal from resource pools corresponding to the periodic service and the aperiodic service. For example, if the periodic service corresponds to a resource pool pool 1, and the aperiodic service corresponds to a resource pool pool 2, the access network device allocates, based on the BSR 1, the transmission resource to the periodic service of the terminal from the resource pool pool 1, and the access network device allocates, based on the BSR 2, the transmission resource to the aperiodic service of the terminal from the resource pool pool 2.

For another example, when the second information included in the MAC header indicates that the first information specifically indicates the service type of the to-be-transmitted data, the access network device may determine, based on a correspondence between the first information and the service type, a specific service to which the to-be-transmitted data belongs. For example, if first information corresponding to a BSR 1 in the MAC CE indicates the periodic unicast service, first information corresponding to a BSR 2 indicates the aperiodic unicast service, first information corresponding to a BSR 3 indicates the periodic groupcast service, and first information corresponding to a BSR 4 indicates the aperiodic groupcast service, the access network device may allocate, based on the BSR 1, the BSR 2, the BSR 3, and the BSR 4, the transmission resource to the terminal from resource pools corresponding to the periodic unicast service, the aperiodic unicast service, the periodic groupcast service, and the aperiodic groupcast service. For example, if the periodic unicast service corresponds to a resource pool pool 1, the aperiodic unicast service corresponds to a resource pool pool 2, the periodic groupcast service corresponds to a resource pool pool 3, and the aperiodic groupcast service corresponds to a resource pool pool 4, the access network device allocates, based on the BSR 1, the transmission resource to the periodic unicast service of the terminal from the resource pool pool 1; the access network device allocates, based on the BSR 2, the transmission resource to the aperiodic unicast service of the terminal from the resource pool pool 2; the access network device allocates, based on the BSR 3, the transmission resource to the periodic groupcast service of the terminal from the resource pool pool 3; and the access network device allocates, based on the BSR 4, the transmission resource to the aperiodic groupcast service of the terminal from the resource pool pool 4.

For another example, when the second information included in the MAC header indicates that the first information specifically indicates the service type and the transmission link of the to-be-transmitted data, the access network device may determine, based on a correspondence between the first information, the service type, and the transmission link, a specific service type and a specific transmission link to which the to-be-transmitted data belongs. For example, if first information corresponding to a BSR 1 in the MAC CE indicates a groupcast service on the LTE sidelink, first information corresponding to a BSR 2 indicates a unicast service on the NR sidelink, and first information corresponding to a BSR 3 indicates a groupcast service on the NR sidelink, the access network device may allocate the transmission resource to the terminal based on resource pools corresponding to different service types on different transmission links. For example, if the groupcast service on the LTE sidelink corresponds to a resource pool pool 1, the unicast service on the NR sidelink corresponds to a resource pool pool 2, and the groupcast service on the 5G sidelink corresponds to a resource pool pool 3, the access network device may allocate, based on the BSR 1, the transmission resource to the groupcast service on the LTE sidelink from the resource pool pool 1; the access network device allocates, based on the BSR 2, the transmission resource to the unicast service on the NR sidelink from the resource pool pool 2; and the access network device allocates, based on the BSR 3, the transmission resource to the groupcast service on the NR sidelink from the resource pool pool 3.

For another example, when first information corresponding to a BSR 1 in the MAC CE indicates a groupcast service on the LTE sidelink, first information corresponding to a BSR 2 indicates a unicast service on the NR sidelink, and first information corresponding to a BSR 3 indicates a groupcast service on the NR sidelink, the access network device may allocate the transmission resource to the terminal based on resource pools corresponding to different service types on different transmission links. For example, if the groupcast service on the LTE sidelink corresponds to a resource pool pool 1, the unicast service on the NR sidelink corresponds to a resource pool pool 2, and the groupcast service on the 5G sidelink corresponds to a resource pool pool 3, the access network device may allocate, based on the BSR 1, the transmission resource to the groupcast service on the LTE sidelink from the resource pool pool 1; the access network device allocates, based on the BSR 2, the transmission resource to the unicast service on the NR sidelink from the resource pool pool 2; and the access network device allocates, based on the BSR 3, the transmission resource to the groupcast service on the NR sidelink from the resource pool pool 3.

For another example, when the first information included in the MAC header is used to indicate that a service type, of the to-be-transmitted data, indicated by all the BSRs included in the MAC CE is the unicast service, a transmission link is the NR sidelink, and the MAC CE includes a BSR 1, the access network device may allocate the transmission resource to the terminal based on resource pools corresponding to different service types on different transmission links. For example, if a groupcast service on the LTE sidelink corresponds to a resource pool pool 1, a unicast service on the NR sidelink corresponds to a resource pool pool 2, and a groupcast service on the 5G sidelink corresponds to a resource pool pool 3, the access network device may allocate, based on the BSR 1, the transmission resource to the unicast service on the NR sidelink from the resource pool pool 2.

Based on the method shown in FIG. 3, when reporting the BSR to the access network device, the terminal may further report the attribute information of the to-be-transmitted data to the access network device, so that the access network device allocates the transmission resource to the terminal based on the size, of the to-be-transmitted data, indicated by the BSR and the attribute information of the to-be-transmitted data. Compared with the conventional technology, related information of to-be-transmitted data reported by the terminal to the access network device is diversified, and provides abundant reference basis for the access network device to allocate the transmission resource, so that the transmission resource allocated by the access network device to the terminal better satisfies a data transmission requirement. This avoids a problem caused by that an existing access network device allocates a transmission resource to a terminal only based on a size, of to-be-transmitted data, indicated by a BSR.

For example, for the first information in this embodiment of this application, refer to descriptions in the following manners (1) to (6). The first terminal may indicate different attribute information of the to-be-transmitted data to the access network device in any one or more of the following manners (1) to (6). For example, the first terminal may indicate the service type of the to-be-transmitted data to the access network device in the following manner (1), and indicate the QoS requirement, the transmission link, or the like of the to-be-transmitted data to the access network device in any manner (for example, the manner (2) or the manner (3)) other than the manner (1). This is not limited. Manner (1): The first information is included in the MAC CE, the first information is an indicator, and the indicator may be used to indicate the attribute information of the to-be-transmitted data.

Correspondingly, after receiving the MAC PDU sent by the terminal, the access network device may obtain the indicator from the MAC CE included in the MAC PDU, and determine the attribute information of the to-be-transmitted data based on the indicator.

Optionally, the indicator is any preset combination of a letter, a Chinese character, a number, a special character, and the like that are easy to identify, understand, and memorize by a user. The attribute information indicated by the indicator may be specified in a protocol and preconfigured for the terminal and the access network device, or may be configured by the access network device for the first terminal by using signaling (for example, radio resource control (radio resource control, RRC) signaling or MAC signaling). The indicator may be in a one-to-one correspondence with the BSR, and is used to indicate attribute information, of to-be-transmitted data, indicated by a BSR corresponding to the indicator. Indicators corresponding to different BSRs may be different or the same. A length of the indicator and a location of the indicator in the MAC CE are not limited in this embodiment of this application. For example, the indicator may occupy first several bits in the MAC CE, or may occupy other bits in the MAC CE. This is not limited.

For example, a broadcast ID is used to indicate the broadcast service, a groupcast ID is used to indicate the groupcast service, and a unicast ID is used to indicate the unicast service. The MAC CE includes a BSR 1, a BSR 2, and a BSR 3. An example in which the BSR 1 is used to indicate a size of to-be-transmitted data on an LCG 1, the BSR 2 is used to indicate a size of to-be-transmitted data on an LCG 2, and the BSR 3 is used to indicate a size of to-be-transmitted data on an LCG 3 is used. As shown in FIG. 4a, if the BSR 1 corresponds to the unicast ID, the BSR 2 corresponds to the groupcast ID, and the BSR 3 corresponds to the broadcast ID, it can be learned that a service type of the to-be-transmitted data on the LCG 1 is the unicast service, a service type of the to-be-transmitted data on the LCG 2 is the groupcast service, and a service type of the to-be-transmitted data on the LCG 3 is the broadcast service.

Similarly, for a manner of indicating other attribute information of the to-be-transmitted data by using the indicator, refer to FIG. 4a. For example, an indicator used to indicate the transmission link of the to-be-transmitted data and the BSR may be correspondingly carried in the MAC CE and sent to the access network device, or an indicator used to indicate the QoS requirement of the to-be-transmitted data and the BSR may be correspondingly carried in the MAC CE and sent to the access network device, or an indicator used to indicate the unicast pair corresponding to the to-be-transmitted data and the BSR may be correspondingly carried in the MAC CE and sent to the access network device.

For example, an NR sidelink ID is used to indicate the transmission link: the NR sidelink, and an LTE sidelink ID is used to indicate the transmission link: the LTE sidelink. As shown in FIG. 4b, if the MAC CE includes a BSR 1, a BSR 2, and a BSR 3, the BSR 1, the BSR 2, and the BSR 3 are as described above. The BSR 1 corresponds to the NR sidelink ID, the BSR 2 corresponds to the LTE sidelink ID, and the BSR 3 corresponds to the LTE sidelink ID. It can be learned that to-be-transmitted data on an LCG 1 is transmitted through the NR sidelink, to-be-transmitted data on an LCG 2 is transmitted through the LTE sidelink, and to-be-transmitted data on an LCG 3 is transmitted through the LTE sidelink.

For another example, the MAC CE includes an indicator used to indicate the unicast pair. For example, a unicast pair 1 indicates a unicast pair from UE A to UE B, and a unicast pair 2 indicates a unicast pair from the UE A to UE C. It is assumed that the unicast pair from the UE A to the UE B may be scrambled by using a pair RNTI 1, and the unicast pair from the UE A to the UE C may be scrambled by using a pair RNTI 2. If the UE A sends, through the MAC CE in the MAC PDU, the unicast pair 1 corresponding to the BSR 1 and the unicast pair 2 corresponding to the BSR 2 to the access network device, after receiving the MAC CE, the access network device may perform, based on the unicast pair 1, scrambling by using the RNTI 1 when allocating a transmission resource to the UE A, and perform, based on the unicast pair 2, scrambling by using the RNTI 2 when allocating a transmission resource to the UE A.

In addition, to enable the access network device to obtain a plurality of types of attribute information of the to-be-transmitted data during one reporting of the BSR, the first terminal may send, to the access network device through the MAC CE, one or more indicators indicating different attribute information. For example, an indicator used to indicate the service type of the to-be-transmitted data and an indicator used to indicate the transmission link of the to-be-transmitted data may be carried together and sent to the access network device, so that the access network device determines, based on the received indicators, the service type and the transmission link of the to-be-transmitted data. Alternatively, an indicator used to indicate the service type of the to-be-transmitted data, an indicator used to indicate the transmission link of the to-be-transmitted data, and an indicator used to indicate the QoS requirement of the to-be-transmitted data may be carried together and sent to the access network device, so that the access network device determines, based on the received indicators, the service type, the transmission link, and the QoS requirement of the to-be-transmitted data. Alternatively, an indicator used to indicate the service type of the to-be-transmitted data, an indicator used to indicate the transmission link of the to-be-transmitted data, an indicator used to indicate the QoS requirement of the to-be-transmitted data, and an indicator used to indicate the unicast pair corresponding to the to-be-transmitted data may be carried together and sent to the access network device, so that the access network device determines, based on the received indicators, the service type, the transmission link, the QoS requirement of the to-be-transmitted data, and the unicast pair corresponding to the to-be-transmitted data.

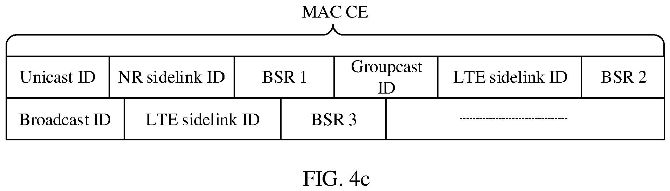

For example, as shown in FIG. 4c, the MAC CE includes a BSR 1, a BSR 2, and a BSR 3, and the BSR 1, the BSR 2, and the BSR 3 are as described above. The BSR 1 corresponds to a unicast ID and an NR sidelink ID, the BSR 2 corresponds to a groupcast ID and an LTE sidelink ID, and the BSR 3 corresponds to a broadcast ID and an LTE sidelink ID, to indicate that a service type of to-be-transmitted data on an LCG 1 is the unicast service and the to-be-transmitted data is transmitted through the NR sidelink, a service type of to-be-transmitted data on an LCG 2 is the groupcast service and the to-be-transmitted data is transmitted through the LTE sidelink, and a service type of to-be-transmitted data on an LCG 3 is the broadcast service and the to-be-transmitted data is transmitted through the LTE sidelink.

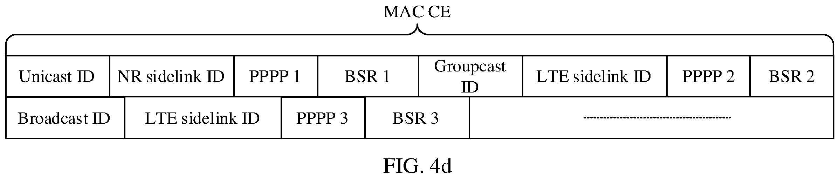

For another example, as shown in FIG. 4d, the MAC CE includes a BSR 1, a BSR 2, and a BSR 3, and the BSR 1, the BSR 2, and the BSR 3 are as described above. The BSR 1 corresponds to a unicast ID, an NR sidelink ID, and a PPPP 1, the BSR 2 corresponds to a groupcast ID, an LTE sidelink ID, and a PPPP 2, and the BSR 3 corresponds to a broadcast ID, an LTE sidelink ID, and a PPPP 3, to indicate that to-be-transmitted data on an LCG 1 is the unicast service that is to be transmitted through the NR sidelink and whose QoS requirement is the PPPP 1, to-be-transmitted data on an LCG 2 is the groupcast service that is to be transmitted through the LTE sidelink and whose QoS requirement is the PPPP 2, and to-be-transmitted data on an LCG 3 is the broadcast service that is to be transmitted through the LTE sidelink and whose QoS requirement is the PPPP 3.

Manner (2): The first information is included in the MAC CE, the first information is an identifier of a first logical channel or an identifier of a first logical channel group, and there is a correspondence between the identifier of the first logical channel or the identifier of the first logical channel group and the attribute information of the to-be-transmitted data, in other words, the identifier of the first logical channel or the identifier of the first logical channel group indicates the attribute information of the to-be-transmitted data.

For example, the MAC CE includes the identifier of the first logical channel group. Correspondingly, after receiving the MAC PDU sent by the first terminal, the access network device may obtain the identifier of the first logical channel group from the MAC CE included in the MAC PDU, and determine the attribute information of the to-be-transmitted data based on the identifier of the first logical channel group and a correspondence between an identifier of a logical channel group and the attribute information. For example, the access network device may query the correspondence between the identifier of the logical channel group and the attribute information, and use attribute information corresponding to the identifier of the first logical channel group in the correspondence as the attribute information of the to-be-transmitted data. In this embodiment of this application, the attribute information in the correspondence may include any one or a combination of a service type, a QoS requirement, a transmission link, and a unicast pair. Optionally, the identifier of the first logical channel or the identifier of the first logical channel group is not an identifier of a logical channel bound to the BSR or an identifier of a logical channel group bound to the BSR, but is a newly added identifier used to indicate the attribute information of the to-be-transmitted data. For example, if identifiers of logical channel groups that are allocated to the first terminal and that are used to bind the BSR are an LCG ID 0 to an LCG ID 3, another LCG ID other than the LCG ID 0 to the LCG ID 3 may be used to indicate the attribute information of the to-be-transmitted data. For example, an LCG ID 5 may be used to indicate the attribute information of the to-be-transmitted data.

In an example in which the identifier of the logical channel group is used to indicate the attribute information of the to-be-transmitted data, the correspondence between the identifier of the logical channel group and the attribute information may be specified in a protocol and preconfigured for the first terminal and the access network device, or may be configured by the access network device for the first terminal by using signaling (for example, RRC signaling or MAC signaling). The first terminal may query the correspondence, send, to the access network device through the MAC CE, the identifier that is of the logical channel group and that is used to indicate the attribute information of the to-be-transmitted data. After receiving the MAC CE, the access network device may query the correspondence, and determine the attribute information of the to-be-transmitted data based on the correspondence.

For example, the attribute information is the service type, and the following Table 1 shows a correspondence between the identifier of the logical channel group and the service type. As shown in Table 1, an LCG ID 5 identifies a broadcast service, an LCG ID 6 identifies a unicast service, and an LCG ID 7 identifies a groupcast service. Assuming that a service type of to-be-transmitted data of a terminal 1 is a broadcast type, the terminal 1 may query Table 1 to send, to the access network device through the MAC CE, the LCG ID 5 corresponding to the broadcast service and the BSR. After receiving the MAC CE, the access network device may obtain the LCG ID 5 from the MAC CE. By querying Table 1, it is found that the LCG ID 5 corresponds to the broadcast service, and then it is determined that the service type of the to-be-transmitted data on the terminal 1 is the broadcast type.

**Table 1**

| LCG ID | Service type |
|---|---|
| LCG ID 5 | Broadcast service |
| LCG ID 6 | Unicast service |
| LCG ID 7 | Groupcast service |

Similarly, for a manner of indicating other attribute information of the to-be-transmitted data by using the identifier of the first logical channel or the identifier of the first logical channel group, refer to the foregoing description. Details are not described again. For example, the identifier of the first logical channel or the identifier of the first logical channel group may be used to indicate the QoS requirement of the to-be-transmitted data, the transmission link of the to-be-transmitted data, the unicast pair corresponding to the to-be-transmitted data, or the like.

Manner (3): The BSR includes an identifier of a second logical channel group. To be specific, the to-be-transmitted data indicated by the BSR is to-be-transmitted data on a second logical channel group of the first terminal, the first information is the identifier of the second logical channel group, there is a correspondence between the identifier of the second logical channel group and the attribute information of the to-be-transmitted data, and the identifier of the second logical channel group may be used to indicate the attribute information of the to-be-transmitted data. Correspondingly, after receiving the MAC PDU sent by the first terminal, the access network device may obtain the identifier of the second logical channel group from the BSR included in the MAC CE, and determine the attribute information of the to-be-transmitted data based on the identifier of the second logical channel group and a correspondence between an identifier of a logical channel group and the attribute information. For example, the access network device may query the correspondence between the identifier of the logical channel group and the attribute information, and use attribute information corresponding to the identifier of the second logical channel group in the correspondence as the attribute information of the to-be-transmitted data.

Optionally, the correspondence between the identifier of the logical channel group and the attribute information in this manner is described in the manner (2), and details are not described again. Identifiers of different logical channel groups may indicate same attribute information. A difference lies in that, in this manner, the identifier of the logical channel group in the correspondence is an identifier of a logical channel group that is configured for the first terminal and that is bound to the BSR, for example, may be an LCG ID 0 to an LCG ID 3. The first terminal may determine, based on the correspondence, attribute information corresponding to a logical channel group, bind to-be-transmitted data having the attribute information to the logical channel group for transmission, carry a BSR including an identifier of the logical channel group and a buffer size in a MAC CE in a short BSR format or a truncated BSR format, and send a MAC PDU including the MAC CE to the access network device.

For example, the attribute information is the service type, and the following Table 2 shows a correspondence between the identifier of the logical channel group and the service type. As shown in Table 2, an LCG ID 0 corresponds to a unicast service, an LCG ID 1 and an LCG ID 2 correspond to a broadcast service, and an LCG ID 3 corresponds to a groupcast service. The terminal may determine, by querying Table 2, that the unicast service is transmitted on an LCG identified by the LCG ID 0, the broadcast service is transmitted on LCGs identified by the LCG ID 1 and the LCG ID 2, and the groupcast service is transmitted on an LCG identified by the LCG ID 3. The terminal may include, in a BSR 1, the LCG ID 0 and a buffer size (buffer size) of to-be-transmitted data whose service type is the unicast service and that is on the LCG identified by the LCG ID 0; include, in a BSR 2, the LCG ID 1, the LCG ID 2, and a buffer size (buffer size) of to-be-transmitted data whose service type is the broadcast service and that is on the LCGs identified by the LCG ID 1 and the LCG ID 2; include, in a BSR 3, the LCG ID 3 and a buffer size (buffer size) of to-be-transmitted data whose service type is the groupcast service and that is on the LCG identified by the LCG ID 3; and send the BSR 1, the BSR 2, and the BSR 3 to the access network device through the MAC CE of the MAC PDU. After receiving the MAC PDU, the access network device may query Table 2 to determine, based on a correspondence between an LCG ID and the service type, the attribute information of the to-be-transmitted data corresponding to the BSR. For example, the BSR 1 is a size of data corresponding to the unicast service, the BSR 2 is a size of data corresponding to the broadcast service, and the BSR 3 is a size of data corresponding to the groupcast service.

**Table 2**

| LCG ID | Service type |
|---|---|
| LCG ID 0 | Unicast service |
| LCG ID 1 and LCG ID 2 | Broadcast service |
| LCG ID 3 | Groupcast service |

Similarly, for a manner of indicating other attribute information of the to-be-transmitted data by using the identifier of the second logical channel group, refer to the foregoing description. Details are not described again. For example, the identifier of the second logical channel group may be used to indicate the QoS requirement of the to-be-transmitted data, the transmission link of the to-be-transmitted data, the unicast pair corresponding to the to-be-transmitted data, or the like.

It can be learned from the foregoing description that in the manner (3), an identifier of an existing logical channel group may be used to indicate the attribute information of the to-be-transmitted data. For example, in the manner (3), a format of the BSR in the MAC CE may be a truncated BSR or a short BSR. In addition, in the manner (3), the second logical channel group may be replaced with a second logical channel, that is, the BSR is bound to a logical channel, and the attribute information of the to-be-transmitted data is indicated by using an identifier of the logical channel. Details are not described again.

Manner (4): The BSR is located in a first bit field in the MAC CE, the first information may be the first bit field, there is a correspondence between the first bit field and the attribute information of the to-be-transmitted data, and the first bit field may be used to indicate the attribute information of the to-be-transmitted data.

Correspondingly, after receiving the MAC PDU sent by the first terminal, the access network device determines that the BSR is located in the first bit field, and then determines, based on a correspondence between a bit field and the attribute information, attribute information corresponding to the first bit field in the correspondence between the bit field and the attribute information as the attribute information of the to-be-transmitted data.

Optionally, for related descriptions of the attribute information, refer to the foregoing descriptions. Details are not described again. The correspondence between the bit field and the attribute information may be preconfigured for the access network device and the first terminal, or may be configured by the access network device for the first terminal by using signaling (for example, radio resource control (radio resource control, RRC) signaling or MAC signaling). The first terminal may fill, based on the correspondence between the bit field and the attribute information, a bit field corresponding to attribute information with a BSR used to indicate a size of to-be-transmitted data that has the attribute information, and send the BSR to the access network device.

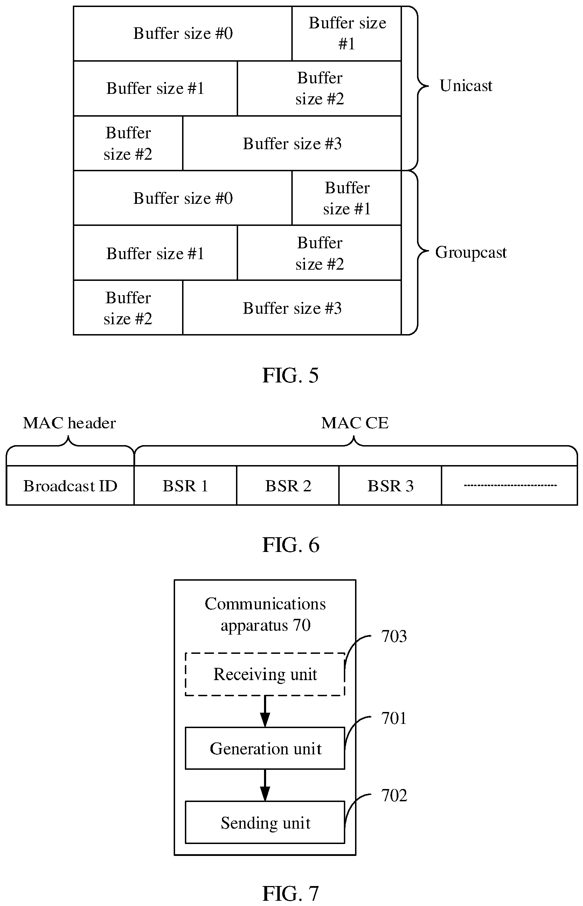

For example, using a long BSR as an example, if the terminal has two service types: unicast and groupcast, the terminal may place, based on a correspondence between the bit field and the service type as shown in FIG. 5, a BSR corresponding to the unicast into several initial bytes (bytes), and a BSR corresponding to the groupcast into several subsequent bytes.

Similarly, for a manner of indicating other attribute information of the to-be-transmitted data by using a bit field in which the BSR is located, refer to the foregoing description. Details are not described again. For example, the bit field in which the BSR is located may be used to indicate the QoS requirement of the to-be-transmitted data, the transmission link of the to-be-transmitted data, the unicast pair corresponding to the to-be-transmitted data, or the like. For example, the terminal has two types of transmission links: an NR sidelink and an LTE sidelink. In this case, the terminal may place, based on a correspondence between the bit field and a transmission link, a BSR corresponding to the NR sidelink into several initial bytes, and a BSR corresponding to the LTE sidelink into several subsequent bytes. Alternatively, the terminal adds two unicast pairs: a unicast pair 1 and a unicast pair 2. In this case, the terminal may place, based on a correspondence between the bit field and a unicast pair, a BSR corresponding to the unicast pair 1 into several initial bytes, and a BSR corresponding to the unicast pair 2 into several subsequent bytes.

Manner (5): The first information is included in the MAC header.

Correspondingly, after receiving the MAC PDU, the access network device may obtain the first information from the MAC header, and determine the attribute information of the to-be-transmitted data based on the first information.

Optionally, the first information is an indicator used to indicate the attribute information of the to-be-transmitted data. For an implementation form of the indicator, refer to the implementation form of the indicator in the foregoing manner (1). Details are not described again. A difference lies in that in manner (5), the first information may correspond to all BSRs included in the MAC CE, and is used to indicate attribute information of to-be-transmitted data corresponding to all the BSRs in the MAC CE. In this manner, attribute information of to-be-transmitted data corresponding to different BSRs in a same MAC CE is the same.

For example, the MAC CE includes a BSR 1, a BSR 2, and a BSR 3. The BSR 1 is used to indicate a size of to-be-transmitted data on an LCG 1, the BSR 2 is used to indicate a size of to-be-transmitted data on an LCG 2, and the BSR 3 is used to indicate a size of to-be-transmitted data on an LCG 3. If service types of the to-be-transmitted data on the LCG 1, the LCG 2, and the LCG 3 are broadcast services, as shown in FIG. 6, the MAC header may carry a broadcast ID, to indicate that a service type of to-be-transmitted data of the MAC CE is the broadcast service. Similarly, for a manner of indicating other attribute information of the to-be-transmitted data by using the first information included in the MAC header, refer to the foregoing description. Details are not described again. For example, the first information included in the MAC header may be used to indicate the QoS requirement of the to-be-transmitted data, the transmission link of the to-be-transmitted data, the unicast pair corresponding to the to-be-transmitted data, or the like.

In addition, in the manner (5), formats of MAC CEs in different MAC PDUs may be the same or may be different. This is not limited.

Manner (6): The first information is a format of the MAC CE, and there is a correspondence between the format of the MAC CE and the attribute information of the to-be-transmitted data. In other words, the attribute information of the to-be-transmitted data is implicitly indicated by using the format of the MAC CE.

Correspondingly, after receiving the MAC PDU sent by the first terminal, the access network device determines the attribute information of the to-be-transmitted data based on the correspondence between the format of the MAC CE and the attribute information of the to-be-transmitted data.

Optionally, in this embodiment of this application, the format of the MAC CE may be alternatively described as a format of the BSR carried in the MAC CE, and may include one or more of three formats: a long BSR, a short BSR, and a truncated BSR. The correspondence between the format of the MAC CE and the attribute information of the to-be-transmitted data may be specified in a protocol and preconfigured for the access network device and the first terminal, or may be configured by the access network device for the first terminal by using signaling (for example, RRC signaling or MAC signaling). For example, the long BSR may correspond to a broadcast service, the short BSR may correspond to a unicast service, and the truncated BSR may correspond to a groupcast service. Alternatively, the long BSR corresponds to an NR sidelink, the short BSR corresponds to an LTE sidelink, and the like; or the long BSR corresponds to a unicast pair 1, the short BSR corresponds to a unicast pair 2, the truncated BSR corresponds to a unicast pair 3, and the like.

In an example, before step 301 is performed, the foregoing six manners (1) to (6) may be preconfigured for the access network device. The access network device may select, from the six manners, a manner used to indicate the attribute information of the to-be-transmitted data, and indicate the selected manner to the first terminal, so that the first terminal generates the MAC PDU in the manner indicated by the access network device. For example, the process may include: The access network device sends first indication information to the first terminal.

The first terminal receives the first indication information sent by the access network device, and generates the MAC PDU based on the first indication information.

Optionally, the first indication information is used to indicate the terminal to indicate the attribute information of the to-be-transmitted data by using the first information, and the first information may be the first information in any one of the foregoing manners (1) to (6). The first indication information may be a number or an index number of any one of the manners (1) to (6), or may be another identifier. This is not limited.

In another example, the foregoing six manners (1) to (6) may be further preconfigured for the first terminal and the access network device. Before performing step 301, the first terminal may select, from the six manners, a manner used to indicate the attribute information of the to-be-transmitted data, and indicate the selected manner to the access network device, so that the access network device determines the attribute information of the to-be-transmitted data in a corresponding manner according to an indication of the first terminal. For example:
The MAC PDU sent by the first terminal to the access network device includes second indication information, the second indication information is used to indicate, to the access network device, that the first terminal indicates the attribute information of the to-be-transmitted data by using the first information. After receiving the MAC PDU, the access network device may obtain the second indication information from the MAC PDU, determine, based on the second indication information, that the first terminal indicates the attribute information of the to-be-transmitted data by using the first information, and determine the attribute information of the to-be-transmitted data based on the first information.

In still another example, the first information may be the first information described in any one of the foregoing manners (1) to (6). The second indication information may include a number or an index number of any one of the manners (1) to (6), or may be another identifier. This is not limited.

The foregoing mainly describes the solutions provided in the embodiments of this application from a perspective of interaction between network elements. It can be understood that, to implement the foregoing functions, the network elements, for example, the terminal and the access network device, include corresponding hardware structures and/or software modules for performing the functions. A person skilled in the art should easily be aware that, in combination with the examples described in the embodiments disclosed in this specification, algorithm steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this applic ation. In the embodiments of this application, the terminal and the access network device may be divided into functional modules based on the foregoing method examples. For example, each functional module may be obtained through division based on each function, or two or more functions may be integrated in one processing module. The integrated module may be implemented in a form of hardware, or may be implemented in a form of a software functional module. It should be noted that, in the embodiments of this application, module division is an example, and is merely logical function division. In actual implementation, another division manner may be used.

FIG. 7 is a schematic composition diagram of a communications apparatus 70 according to an embodiment of this application. The communications apparatus 70 may be a first terminal, or a chip or a system on chip in a first terminal, or may be a component or an apparatus that is in a first terminal and that is responsible for implementing a related function or operation in the embodiments of this application. In a possible design, as shown in FIG. 7, the communications apparatus 70 may include a generation unit 701 and a sending unit 702.

The generation unit 701 is configured to generate a MAC PDU, where the MAC PDU includes a MAC header and a MAC CE, and the MAC CE includes a BSR; and the BSR is used to indicate a size of to-be-transmitted data, the BSR corresponds to first information, the first information is used to indicate attribute information of the to-be-transmitted data, and the to-be-transmitted data is data to be transmitted by the communications apparatus to a second terminal through a sidelink. For example, the generation unit 701 may support the communications apparatus 70 in performing step 301.

The sending unit 702 is configured to send the MAC PDU to an access network device. For example, the sending unit 702 may support the communications apparatus 70 in performing step 302.

Further, as shown in FIG. 7, the communications apparatus 70 may further include a receiving unit 703.

The receiving unit 703 is configured to receive first indication information sent by the access network device, where the first indication information is used to indicate the communications apparatus to indicate the attribute information of the to-be-transmitted data by using the first information.

For example, the generation unit 701 is configured to generate the MAC PDU based on the first indication information. For example, the first information is described in the foregoing method embodiments, and may be the first information described in any one of the foregoing manners (1) to (6).

For example, all related content of the steps in the foregoing method embodiments may be cited in function descriptions of corresponding functional modules. Details are not described herein again. The communications apparatus 70 provided in this embodiment of this application is configured to perform a function of the first terminal in the BSR reporting method shown in FIG. 3, and can achieve a same effect as the foregoing BSR reporting method. In another possible implementation, the communications apparatus 70 shown in FIG. 7 may include a processing module and a communications module. The processing module may integrate functions of the generation unit 701, and the communications module may integrate functions of the sending unit 702 and the receiving unit 703. The processing module is configured to control and manage an action of the communications apparatus 70. For example, the processing module is configured to support the communications apparatus 70 in performing step 301, and another process of the technology described in this specification. The communications module is configured to support the communications apparatus 70 in performing step 302 and communicating with another network entity. Further, the communications apparatus 70 shown in FIG. 7 may further include a storage module, configured to store program code and data of the communications apparatus 70.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications module may be a transceiver circuit, a communications interface, or the like. The storage module may be a memory. When the processing module is a processor, the communications module is a communications interface, and the storage module is a memory, the communications apparatus 70 shown in FIG. 7 may be the communications apparatus shown in FIG. 2.

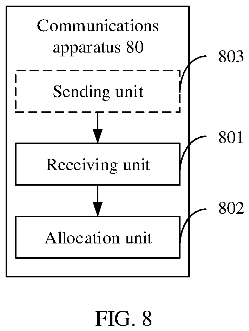

FIG. 8 is a schematic composition diagram of a communications apparatus 80 according to an embodiment of this application. The communications apparatus 80 may be an access network device, or a chip or a system on chip in an access network device, or may be a component or an apparatus that is in an access network device and that is responsible for implementing a related function or operation in the embodiments of this application. As shown in FIG. 8, the communications apparatus 80 may include a receiving unit 801 and an allocation unit 802.

The receiving unit 801 is configured to receive a MAC PDU sent by a first terminal, where the MAC PDU includes a MAC header and a MAC CE, and the MAC CE includes a BSR; and the BSR is used to indicate a size of to-be-transmitted data, the BSR corresponds to first information, the first information is used to indicate attribute information of the to-be-transmitted data, and the to-be-transmitted data is data to be transmitted by the first terminal to a second terminal through a sidelink. For example, the receiving unit 801 is configured to support the communications apparatus 80 in performing step 303.

The allocation unit 802 is configured to allocate a transmission resource to the first terminal based on the BSR and the attribute information of the to-be-transmitted data. For example, the allocation unit 802 is configured to support the communications apparatus 80 in performing step 303.

Further, as shown in FIG. 8, the communications apparatus 80 may further include a sending unit 803.

The sending unit 803 is configured to send first indication information to the first terminal, where the first indication information is used to indicate the first terminal to indicate the attribute information of the to-be-transmitted data by using the first information.

For example, the first information is described in the foregoing method embodiments, and may be the first information described in any one of the foregoing manners (1) to (6).

For example, all related content of the steps in the foregoing method embodiments may be cited in function descriptions of corresponding functional modules. Details are not described herein again. The communications apparatus 80 provided in this embodiment of this application is configured to perform a function of the access network device in the BSR reporting method shown in FIG. 3, and can achieve a same effect as the foregoing BSR reporting method.

In another possible implementation, the communications apparatus 80 shown in FIG. 8 may include a processing module and a communications module. The processing module may integrate functions of the allocation unit 802, and the communications module may integrate functions of the receiving unit 801 and the sending unit 803. The processing module is configured to control and manage an action of the communications apparatus 80. For example, the processing module is configured to support the communications apparatus 80 in performing step 303, and another process of the technology described in this specification. The communications module is configured to support the communications apparatus 80 in communicating with another network entity. Further, the communications apparatus 80 shown in FIG. 8 may further include a storage module, configured to store program code and data of the communications apparatus 80.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications module may be a transceiver circuit, a communications interface, or the like. The storage module may be a memory. When the processing module is a processor, the communications module is a communications interface, and the storage module is a memory, the communications apparatus 80 shown in FIG. 8 may be the communications apparatus shown in FIG. 2.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

In this specification, "a plurality of' means two or more than two. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects, and the character "/" in a formula represents a "division" relationship between the associated objects.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application, in essence, or the part contributing to the current technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A buffer status report BSR reporting method, wherein the method comprises:
generating, by a first terminal, a media access control MAC protocol data unit PDU, wherein the MAC PDU comprises a MAC header and a MAC control element CE, and the MAC CE comprises a BSR; the BSR is used to indicate a size of to-be-transmitted data, the BSR corresponds to first information, the first information is used to indicate attribute information of the to-be-transmitted data, and the to-be-transmitted data is data to be transmitted by the first terminal to a second terminal through a sidelink; and the attribute information of the to-be-transmitted data comprises one or more of a service type of the to-be-transmitted data, a quality of service QoS requirement of the to-be-transmitted data, and a transmission link of the to-be-transmitted data; and
sending, by the first terminal, the MAC PDU to an access network device.

2. The method according to claim 1, wherein the method comprises:
receiving, by the first terminal, first indication information sent by the access network device, wherein the first indication information is used to indicate the first terminal to indicate the attribute information of the to-be-transmitted data by using the first information; and
the generating, by a first terminal, a MAC PDU comprises: when there is to-be-transmitted data in a buffer of the first terminal, generating, by the first terminal, the MAC PDU.

3. The method according to claim 1, wherein the method further comprises:
sending, by the first terminal, second indication information to the access network device, wherein the second indication information is used to indicate, to the access network device, that the first terminal indicates the attribute information of the to-be-transmitted data by using the first information.

4. A buffer status report BSR reporting method, wherein the method comprises:
receiving, by an access network device, a media access control MAC protocol data unit PDU sent by a first terminal, wherein the MAC PDU comprises a MAC header and a MAC control element CE, and the MAC CE comprises a BSR; the BSR is used to indicate a size of to-be-transmitted data, the BSR corresponds to first information, the first information is used to indicate attribute information of the to-be-transmitted data, and the to-be-transmitted data is data to be transmitted by the first terminal to a second terminal through a sidelink; and the attribute information of the to-be-transmitted data comprises one or more of a service type of the to-be-transmitted data, a quality of service QoS requirement of the to-be-transmitted data, and a transmission link of the to-be-transmitted data; and
allocating, by the access network device, a transmission resource to the first terminal based on the BSR and the attribute information of the to-be-transmitted data.

5. The method according to claim 4, wherein the method comprises:
sending, by the access network device, first indication information to the first terminal, wherein the first indication information is used to indicate the first terminal to indicate the attribute information of the to-be-transmitted data by using the first information.

6. The method according to claim 4, wherein the method further comprises:
receiving, by the access network device, second indication information from the first terminal, wherein the second indication information is used to indicate, to the access network device, that the first terminal indicates the attribute information of the to-be-transmitted data by using the first information.

7. The method according to any one of claims 1 to 6, wherein
the first information is comprised in the MAC CE; and
the first information is an indicator;
the first information is an identifier of a first logical channel or an identifier of a first logical channel group, and there is a correspondence between the identifier of the first logical channel or the identifier of the first logical channel group and the attribute information of the to-be-transmitted data; or
the first information is an identifier used to indicate the attribute information of the to-be-transmitted data.

8. The method according to any one of claims 1 to 7, wherein
the MAC CE further comprises an indicator used to indicate the transmission link of the to-be-transmitted data;
the MAC CE further comprises an indicator used to indicate the QoS requirement of the to-be-transmitted data;
the MAC CE further comprises an indicator used to indicate the service type of the to-be-transmitted data and an indicator used to indicate the transmission link of the to-be-transmitted data; or
the MAC CE further comprises an indicator used to indicate the service type of the to-be-transmitted data, an indicator used to indicate the transmission link of the to-be-transmitted data, and an indicator used to indicate the QoS requirement of the to-be-transmitted data.

9. The method according to claim 7 or 8, wherein
the indicator is a combination of one or more types of information such as a letter, a digit, or a character.

10. The method according to any one of claims 1 to 9, wherein
the BSR comprises an identifier of a second logical channel group, the first information is the identifier of the second logical channel group, and there is a correspondence between the identifier of the second logical channel group and the attribute information of the to-be-transmitted data; or
the BSR is located in a first bit field in the MAC CE, the first information is the first bit field, and there is a correspondence between the first bit field and the attribute information of the to-be-transmitted data.

11. The method according to any one of claims 1 to 10, wherein
the first information is comprised in the MAC header, and the first information is an indicator; or
the first information is a format of the MAC CE, and there is a correspondence between the format of the MAC CE and the attribute information of the to-be-transmitted data.

12. The method according to any one of claims 4 to 11, wherein the method further comprises:
determining, by the access network device based on a correspondence between the first information and a service type, the service type to which the to-be-transmitted data belongs.

13. The method according to any one of claims 6 to 11, wherein the method further comprises:
determining, by the access network device based on the second indication information, that the first terminal indicates the attribute information of the to-be-transmitted data by using the first information, and determining, based on a correspondence between the first information and a service type, the service type to which the to-be-transmitted data belongs.

14. The method according to any one of claims 1 to 13, wherein
the indicator used to indicate the transmission link of the to-be-transmitted data and the BSR are correspondingly carried in the MAC CE and sent to the access network device; or
the indicator used to indicate the QoS requirement of the to-be-transmitted data and the BSR are correspondingly carried in the MAC CE and sent to the access network device.

15. The method according to any one of claims 1 to 14, wherein
the indicator used to indicate the service type of the to-be-transmitted data and the indicator used to indicate the transmission link of the to-be-transmitted data are carried in the MAC CE and sent to the access network device; or
the indicator used to indicate the service type of the to-be-transmitted data, the indicator used to indicate the transmission link of the to-be-transmitted data, and the indicator used to indicate the QoS requirement of the to-be-transmitted data are carried in the MAC CE and sent to the access network device.

16. The method according to any one of claims 1 to 15, wherein
the service type of the to-be-transmitted data comprises any one or more of a broadcast service, a unicast service, a groupcast service, an aperiodic service, and a periodic service.

17. The method according to any one of claims 1 to 16, wherein
the transmission link of the to-be-transmitted data comprises any one or more of a long term evolution LTE sidelink, a new radio NR sidelink, and an NR Uu link.

18. A communications apparatus, wherein the communications apparatus comprises:
a generation unit, configured to generate a media access control MAC protocol data unit PDU, wherein the MAC PDU comprises a MAC header and a MAC control element CE, and the MAC CE comprises a buffer status report BSR; the BSR is used to indicate a size of to-be-transmitted data, the BSR corresponds to first information, the first information is used to indicate attribute information of the to-be-transmitted data, and the to-be-transmitted data is data to be transmitted by the communications apparatus to a second terminal through a sidelink; and the attribute information of the to-be-transmitted data comprises one or more of a service type of the to-be-transmitted data, a quality of service QoS requirement of the to-be-transmitted data, and a transmission link of the to-be-transmitted data; and
a sending unit, configured to send the MAC PDU to an access network device.

19. The communications apparatus according to claim 18, wherein the communications apparatus further comprises:
a receiving unit, configured to receive first indication information sent by the access network device, wherein the first indication information is used to indicate the communications apparatus to indicate the attribute information of the to-be-transmitted data by using the first information; and
the generation unit is specifically configured to: when there is to-be-transmitted data in a buffer of the communications apparatus, generate the MAC PDU.

20. The communications apparatus according to claim 18, wherein
the sending unit is further configured to send second indication information to the access network device, wherein the second indication information is used to indicate, to the access network device, that the communications apparatus indicates the attribute information of the to-be-transmitted data by using the first information.

21. A communications apparatus, wherein the communications apparatus comprises:
a receiving unit, configured to receive a media access control MAC protocol data unit PDU sent by a first terminal, wherein the MAC PDU comprises a MAC header and a MAC control element CE, and the MAC CE comprises a buffer status report BSR; the BSR is used to indicate a size of to-be-transmitted data, the BSR corresponds to first information, the first information is used to indicate attribute information of the to-be-transmitted data, and the to-be-transmitted data is data to be transmitted by the first terminal to a second terminal through a sidelink; and the attribute information of the to-be-transmitted data comprises one or more of a service type of the to-be-transmitted data, a quality of service QoS requirement of the to-be-transmitted data, and a transmission link of the to-be-transmitted data; and
an allocation unit, configured to allocate a transmission resource to the first terminal based on the BSR and the attribute information of the to-be-transmitted data.

22. The communications apparatus according to claim 21, wherein the communications apparatus comprises:
a sending unit, configured to send first indication information to the first terminal, wherein the first indication information is used to indicate the first terminal to indicate the attribute information of the to-be-transmitted data by using the first information.

23. The communications apparatus according to claim 21, wherein
the receiving unit is further configured to receive second indication information from the first terminal, wherein the second indication information is used to indicate, to the communications apparatus, that the first terminal indicates the attribute information of the to-be-transmitted data by using the first information.

24. The communications apparatus according to any one of claims 18 to 23, wherein
the first information is comprised in the MAC CE; and
the first information is an indicator;
the first information is an identifier of a first logical channel or an identifier of a first logical channel group, and there is a correspondence between the identifier of the first logical channel or the identifier of the first logical channel group and the attribute information of the to-be-transmitted data; or
the first information is an identifier used to indicate the attribute information of the to-be-transmitted data.

25. The communications apparatus according to any one of claims 18 to 24, wherein
the MAC CE further comprises an indicator used to indicate the transmission link of the to-be-transmitted data;
the MAC CE further comprises an indicator used to indicate the QoS requirement of the to-be-transmitted data;
the MAC CE further comprises an indicator used to indicate the service type of the to-be-transmitted data and an indicator used to indicate the transmission link of the to-be-transmitted data; or
the MAC CE further comprises an indicator used to indicate the service type of the to-be-transmitted data, an indicator used to indicate the transmission link of the to-be-transmitted data, and an indicator used to indicate the QoS requirement of the to-be-transmitted data.

26. The communications apparatus according to claim 24 or 25, wherein
the indicator is a combination of one or more types of information such as a letter, a digit, or a character.

27. The communications apparatus according to any one of claims 18 to 26, wherein
the BSR comprises an identifier of a second logical channel group, the first information is the identifier of the second logical channel group, and there is a correspondence between the identifier of the second logical channel group and the attribute information of the to-be-transmitted data; or
the BSR is located in a first bit field in the MAC CE, the first information is the first bit field, and there is a correspondence between the first bit field and the attribute information of the to-be-transmitted data.

28. The communications apparatus according to any one of claims 18 to 27, wherein
the first information is comprised in the MAC header, and the first information is an indicator; or
the first information is a format of the MAC CE, and there is a correspondence between the format of the MAC CE and the attribute information of the to-be-transmitted data.

29. The communications apparatus according to any one of claims 21 to 28, wherein
the communications apparatus further comprises: a determining unit, configured to determine, based on a correspondence between the first information and a service type, the service type to which the to-be-transmitted data belongs.

30. The communications apparatus according to any one of claims 23 to 28, wherein
the communications apparatus further comprises: a determining unit, configured to: determine, based on the second indication information, to indicate the attribute information of the to-be-transmitted data by using the first information, and determine, based on a correspondence between the first information and a service type, the service type to which the to-be-transmitted data belongs.

31. The communications apparatus according to any one of claims 18 to 30, wherein
the indicator used to indicate the transmission link of the to-be-transmitted data and the BSR are correspondingly carried in the MAC CE and sent to the access network device; or
the indicator used to indicate the QoS requirement of the to-be-transmitted data and the BSR are correspondingly carried in the MAC CE and sent to the access network device.

32. The communications apparatus according to any one of claims 18 to 31, wherein
the indicator used to indicate the service type of the to-be-transmitted data and the indicator used to indicate the transmission link of the to-be-transmitted data are carried in the MAC CE and sent to the access network device; or
the indicator used to indicate the service type of the to-be-transmitted data, the indicator used to indicate the transmission link of the to-be-transmitted data, and the indicator used to indicate the QoS requirement of the to-be-transmitted data are carried in the MAC CE and sent to the access network device.

33. The communications apparatus according to any one of claims 18 to 32, wherein
the service type of the to-be-transmitted data comprises any one or more of a broadcast service, a unicast service, a groupcast service, an aperiodic service, and a periodic service.

34. The communications apparatus according to any one of claims 18 to 33, wherein
the transmission link of the to-be-transmitted data comprises any one or more of a long term evolution LTE sidelink, a new radio NR sidelink, and an NR Uu link.

35. A communications apparatus, wherein the communications apparatus comprises one or more processors, one or more memories are coupled to the one or more processors, and the one or more memories are configured to store instructions; and
when the one or more processors execute the instructions, the communications apparatus is enabled to perform the buffer status report BSR reporting method according to any one of claims 1 to 17.

36. A computer-readable storage medium, wherein the computer-readable storage medium stores computer instructions or programs; and when the computer instructions or the programs are run on a computer, the computer is enabled to perform the buffer status report BSR reporting method according to any one of claims 1 to 17.

37. A chip system, wherein the chip system comprises a processor and a memory, the memory stores instructions, and when the instructions are executed by the processor, the buffer status report BSR reporting method according to any one of claims 1 to 17 is implemented.
